# EUROPEAN PATENT APPLICATION

(11) **EP 3 909 449 A1**
(43) Date of publication of application: **17.11.2021**
(21) Application number: 20177379.3
(22) Date of filing: 29.05.2020
(51) Int. Cl.: A41D 13/11, A62B 23/02, B01D 39/08

(54) **PROTECTIVE FILTERING HALF MASK**

(30) Priority: 15.05.2020 PL 43396420; 11.05.2020 PL 43387920
(71) Applicant: Bisaf Spolka Z Ograniczona Odpowiedzialnoscia, 54-530 Wroclaw (PL)
(72) Inventor: Kundzicz, Karol, 55-080 Smolec (PL)
(74) Representative: AOMB Polska Sp. z.o.o.

(57) **Abstract**

The invention relates to a protective filtering half mask comprising a facepiece covering the nose, mouth and chin, with essentially flat body and rectangular shape, composed of multiple layers of filter polymer non-woven fabric, fastening straps allowing to attach the half mask to the user's head, a nose seal and clips allowing to fit the user's face properly, wherein the facepiece (1) consists of successively arranged non-woven fabric layers comprising: an inner layer (1a) made of a non-woven fabric with the area weight 28 g/m²; a middle layer (1b) made of an electret filter non-woven fabric produced with meltblown technology of fleece forming with the area weight 35 g/m²; an outer layer (1c) made of non-woven fabric with the area weight 28 g/m².

## Description

### Technical field

The invention generally relates to the field of personal respiratory protective equipment. More particularly, the invention relates to a protective face mask, especially in the form of protective filtering half mask that protects against harmful effects of hazardous airborne compounds and pollutants such as particulate aerosols or water-based aerosols (dust, smoke), liquid aerosols (mists) and bioaerosols.

### Prior art

There are commonly known respiratory protection means in the form of filtering half masks, in particular popular anti-dust and anti-smog masks used at workplaces and in large metropolitan areas with high concentrations of airborne dust (atmospheric aerosols). The requirements for half masks of this type are specified in the EN 149:2001+A1:2009 standard. Filtering half masks primarily protect against inhalation of harmful dusts and particles in the atmosphere - this is the so called active protection.

Filtering half masks are usually made of inelastic and non-formable material, which makes them less resistant to mechanical damage and less comfortable in use, because such a rigid half mask is difficult to put in the pocket, store and carry. The half mask also interferes with conducting a casual conversation. A half mask with an exhalation valve is a two-way half mask in which the air in the inhalation phase passes through the filter material, and in the exhalation phase through the filter material and the exhalation valve, and therefore does not fulfil the function of passive protection. A high level of active and passive effectiveness is guaranteed only by the FFP1 and FFP2 half masks - both masks, however, must have no valves to achieve this effect and ensure filtration efficiency of at least 80%. Such masks are also unsuitable for medical use because they do not provide antibacterial protection.

Medical masks, which are subject to requirements specified in the EN14683:2019+AC:2019 standard, mainly provide protection for the patient against infectious agents, and additionally, in certain situations, protect the mask user from splashes of potentially infected liquids. Type I medical masks are intended for patients, type II for medical staff, including doctors, and type IIR for doctors in operating rooms, as they also protect against splashes. Medical masks can also be designed for wearing by patients and other individuals to reduce the risk of infection spreading, especially in epidemic or pandemic situations - this is the so called passive protection.

The disadvantage of medical masks is a low level of filtration of aerosol particles inhaled by the user, and consequently a low active protection parameter of 45% efficiency. A medical mask is also not durable, it should be replaced more frequently, it is flammable, it will not be effective in industry, and may even pose a threat to employees.

Commercially available filtering half masks are made mainly of non-woven filter materials based on an electret filter non-woven fabric produced with meltblown technology of fleece forming. It is their morphological structure which determines under what conditions and where the half mask can be used. The filter non-woven fabric can be made of thermoplastic polymers, e.g., produced with the known method of blowing molten polymer with hot air (meltblown technology), from a mixture of two or more thermoplastic polymers, for example polypropylene and polyester. Another well-known method for producing cover non-woven fabrics is wet needling. Yet another known spunbond technology consists in direct formation of fibres from polymer granulates by spinning.

The half masks of this type are produced in two basic versions. The first one has the shape of a formed cap, providing thermal comfort while adhering to the user's face tightly on the edge. Due to the limited surface area, however, the half masks of this type do not allow for a fully effective respiratory protection, while creating high air flow resistance, which makes breathing difficult. If the case the half mask is used for a longer time, i.e., continuously for 6 hours, the comfort of work is reduced. Because of the disadvantage of this type of half masks, medical masks do not have an electret filter non-woven fabric and are made in a pleated form, with the pleats being virtually located on the entire surface of the half mask. The air flow surface is then significantly improved, due to a very thin material, however, such a mask adheres to the face not only circumferentially, but also in the nose and cheek area, which clearly worsens the thermal comfort caused by sucking the material during inhalation and exhalation. They are still characterized by a low filtration efficiency that is further reduced during use, and consequently they need to be replaced frequently.

A protective half mask known from the PL 192829 patent specification consists of a cup with geometric grid shaped as a rectangle with oblique cut-outs on the long edges located only in the central part. After folding, bending and longitudinal creasing of the filter non-woven fabric these cut-outs form pleats, which, after joining by edge welding, give rise to jagged and sharp edges. The half mask is equipped with a nose clamp and headband. The depth of pleats must be less than the width of the folded half mask. The half mask consists of layers of cover non-woven fabric and the basic filtration layer made of a high-performance electret meltblown non-woven fabric.

A protective half mask is known from the Polish utility model application W.126169. It has a cup made of filter material composed of several layers. The half mask consists of three panels: a central panel equipped with an exhalation valve, a nasal panel and a chin panel with a shape resembling an elongated ellipse. As a result of this design the mask does not match the shape of the face.

As follows from the above, there is a need to provide a versatile and multi-functional protective half mask that will combine the advantages of filtering half masks and medical masks.

### Summary of the invention

According to the present invention, a protective filtering half mask comprises a facepiece that covers a nose, mouth and chin. The facepiece is substantially flat and rectangular, and consists of multiple layers of filter polymer non-woven fabric. The protective filtering half mask is also equipped with fastening straps which allow to attach it to the user's head. The facepiece consists of successively arranged non-woven fabric layers:
an inner layer made of a non-woven fabric with the area weight in the range 20 g/m² ÷ 80 g/m², wherein preferably the area weight is 28 g/m²;
a middle layer made of an electret non-woven fabric produced with meltblown technology of fleece forming, with the area weight in the range 20 g/m² ÷ 120 g/m², wherein preferably the area weight is 42 g/m²;
an outer layer made of a non-woven fabric with the area weight in the range 20 g/m² ÷ 80 g/m², wherein preferably the area weight is 28 g/m².

The facepiece may also have an additional outer layer of material produced with non-woven techniques with the area weight in the range 20 g/m² ÷ 80 g/m², wherein preferably the area weight is 28 g/m².

The inner layer, the outer layer, and the additional outer layer are preferably made with one of the selected technologies including the spunbond, meltblown, water needling technology, or any combination thereof.

The electret filter material of the middle layer is made of loosely laid polymer fibres with an average fibre diameter of no more than 5 µm, with which the filtration efficiency of at least 80% is achieved with the area weight of the filter material being at least 42 g/m².

The fibres for production of each non-woven layer can be made of polymers, especially polyolefinic ones, such as polypropylene and polyethylene.

The protective filtering half mask may have on the inside an 80 mm long, 3 mm to 10 mm thick and 10 mm wide nose seal, allowing the half mask to fit to the user's nose and eliminating leaks around the nose. The nose seal is preferably made of poly(vinyl chloride) or latex foam.

In order to fit the user's face properly, the protective filtering half mask may be equipped with clips to attach fastening straps.

### Advantageous effects

The protective filtering half mask according to the invention combines the advantages of filtering half masks and medical masks. It can be used both to protect the patient against microorganisms carried along with the air exhaled by medical personnel (the so-called "passive" protection) and to protect the user against absorption of harmful aerosols, also those of biological origin (the so-called "active" protection), protecting healthy user against inhaling polluted air in the work environment.

It is flexible, it can be formed, folded, worn in pockets. It is also less prone to material damage and cracks. It also provides the possibility of free intercommunication, it does not limit communication with the patient or other persons.

The protective filtering half mask according to the invention provides the active and passive protection at a level of at least 80%.

### Brief description of the Drawings

The invention is illustrated in the embodiment in drawings, in which:
- Fig. 1: - shows the protective filtering half mask in a perspective view.
- Fig. 2: - shows the arrangement of non-woven fabric layers of the facepiece in a cross section.

### Detailed description of preferred embodiments of the invention

A protective filtering half mask according to the present invention is designed to protect the respiratory system against harmful particulate aerosols (dust, smoke) and liquid particles (mist), including bioaerosols (bacteria, viruses, fungi), and meets at the same time the requirements of two European standards:
a) EN 149:2001+A1:2009 - Respiratory protective devices - Filtering half masks to protect against particles.
b) EN 14683:2019+AC:2019 - Medical masks.

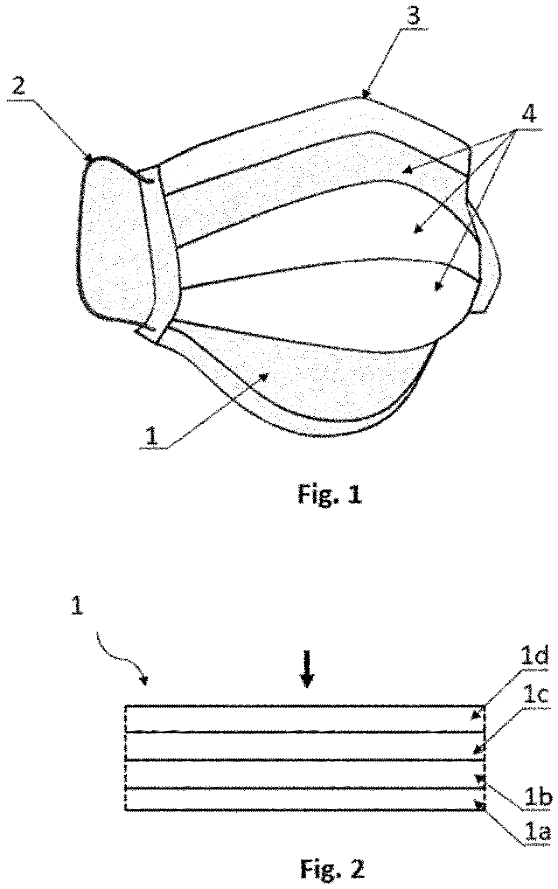

In one preferred embodiment of the invention, Fig. 1 shows a protective filtering half mask having a facepiece 1, fastening straps 2 in the form of ear loops, a nose clamp 3, three pleats 4, and a nose seal and a clip.

The facepiece covering at least partially the face, and at least the nose, mouth and chin, preferably also partially cheeks, made of a flexible filter material, is essentially flat, with an essentially rectangular body, preferably in the shape of a square with minimum dimensions 9 x 9 cm. Roundings, round shapes and uneven line are allowed provided that the shape of the facepiece 1 must be flat and fit in with the shape of a rectangle or square. Exemplary dimensions of the facepiece: length 18.5 cm, width 7.5 cm, and three horizontal pleats 4 in the middle part of the facepiece 1 with a width of 1.5 cm, running along the entire length of the facepiece 1. An 80mm long, 3mm to 10mm thick and 10mm wide nose seal is placed on the inside, allowing the protective filtering half mask to fit the user's nose and eliminating leaks around the nose. The nose seal is made of a poly(vinyl chloride) or latex foam. To ensure a proper fit to the user's face, the fastening straps 2 are connected with a clip (not shown) to each other.

The facepiece 1 is made of a material composed of at least three non-woven fabric layers: inner 1a, middle 1b, and outer 1c ones. The non-woven fabric layers can be connected to each other by spot welding using ultrasound or a tight weld made around the periphery of the facepiece 1.

Fig. 2 shows in cross-section the arrangement of successively arranged layers, where the arrow indicates the direction of the inhaled air, i.e., beginning from the outermost (1c or 1d) from the surrounding to the innermost layer (1a) that directly adheres to the face.

The inner layer 1a is a nonwoven fabric made in the spunbond or water needling technology. Preferably, the area weight of the inner layer 1a is in the range 20 ÷ 80 g/m², and more preferably in the range 27 ÷ 29 g/m², particularly preferably when it is 28 g/m².

The middle layer 1b is made of an electret non-woven fabric produced with the meltblown technology of fleece forming from polyolefinic fibres, for example from polypropylene. It is a layer that effectively stops aerosol and bioaerosol particles. The area weight of the middle layer 1b is in the range 20 ÷ 120 g/m², and preferably is in the range 40 ÷ 90 g/m², and even more preferably it is 42 g/m².

The outer layer 1c is made of a non-woven fabric produced with the spunbond or water needling technologies from synthetic polypropylene fibres with high mechanical resistance and good hygienic properties. Preferably, the area weight of the outer layer 1c is in the range 20 ÷ 80 g/m², and even more preferably in the range 20 ÷ 50 g/m², and particularly preferably it is 28 g/m².

In a preferred embodiment, the facepiece 1 comprises an additional outer layer 1d of material produced with non-woven techniques, e.g., the spunbond or water needling technologies with the area weight in the range 20 ÷ 80 g/m². Preferably, the area weight of the additional outer layer 1d is in the range 20 ÷ 50 g/m², and particularly preferably it is 28 g/m².

The additional outer layer 1d allows for product labelling and personalization, and enhances the functional and aesthetic values of the protective filtrating half mask so that the half mask becomes stiffer (it doesn't suck into the nose when breathing).

A protective filtering half mask made in this way is characterized by a minimum filtration efficiency against all aerosols of at least 80%, as required for the FFP1 protection class half masks, and a half mask with four layers 1a-1d even at the level of 95%, as required for the second FFP2 protection class.

At both ends of the protective filtering half mask are attached two fastening straps 2 in the form of ear loops attached behind the user's ears with a clip enabling better fit to the user's face. The fastening straps 2 may include for example, elastic bands, cords, straps, belts, Velcro, preferably also with an adjustment system.

The entire length of the protective filtering half mask has an 11.5 cm long nose clamp 3 (proportionally smaller for the minimum dimensions of the half mask).

When unfolded, the protective filtering half mask of standard size has a surface area 360.75 cm², and for the folded mask the surface area is 138.75 cm².

The effectiveness and multi-functionality of the protective filtering half mask was achieved by using a filter material made on the basis of an electret filter nonwoven fabric produced with the meltblown technology of fleece forming, which was placed between the inner 1a and one or two outer layers 1c and 1d.

## Claims

1. A protective filtering half mask comprising a facepiece (1) for covering a nose, mouth and chin, of substantially flat body and rectangular shape, composed of multiple layers (1a, 1b, 1c, 1d) of filter polymer non-woven fabric, and fastening means (2) which allow to attach the protective filtering half mask to the user's head, **characterised in that** the facepiece (1) consists of successively arranged non-woven fabric layers:
an inner layer (1a) made of a non-woven fabric with the area weight in the range 20 g/m² ÷ 80 g/m²;
a middle layer (1b) made of an electret non-woven fabric produced with the meltblown technology of fleece forming, with the area weight in the range 20 g/m² ÷ 120 g/m²;
an outer layer (1c) made of a non-woven fabric with the area weight in the range 20 g/m² ÷ 80 g/m².

2. The half mask according to claim 1, **wherein** the facepiece (1) has an additional outer layer (1d) of material produced with non-woven techniques with the area weight in the range 20 g/m² ÷ 80 g/m², and preferably being 28 g/m².

3. The half mask according to claim 1 or 2, **wherein** the inner layer (1a), the outer layer (1c), and the additional outer layer (1d) are made with one of the selected technologies including the spunbond, meltblown, water needling technology, or any combination thereof.

4. The half mask according to claim 1 or 2 or 3, **wherein** the electret filter material of the middle layer (1b) is made of loosely laid polymer fibres with an average fibre diameter of no more than 5 µm, with which the filtration efficiency of at least 80% is achieved with the area weight of the filter material being at least 42 g/m².

5. The half mask according to any of the preceding claims from 1 to 4, **wherein** the fibres for production of each non-woven layer can be made of polymers, especially polyolefinic ones, such as polypropylene and polyethylene.

6. The half mask according to any of the preceding claims from 1 to 5, wherein the area weight of the non-woven fabric from which the inner layer (1a) is made is 28 g/m².

7. The half mask according to any of the preceding claims from 1 to 6, wherein the area weight of the electret filter non-woven fabric from which the middle layer (1b) is made is at least 35 g/m².

8. The half mask according to any of the preceding claims from 1 to 7, wherein the area weight of the non-woven fabric from which the outer layer (1c) is made is 28 g/m².

9. The half mask according to any of the foregoing claims from 1 to 8, wherein it has on the inside an 80 mm long, 3 mm to 10 mm thick and 10 mm wide nose seal, allowing the half mask to fit on the user's nose and eliminating leaks around the nose.

10. The half mask according to any of the foregoing claims from 1 to 9, wherein it has clips to attach the fastening straps (2) allowing to fit the user's face properly.
